# NEUE EUROPÄISCHE PATENTSCHRIFT

(11) **EP 2 082 131 B2**
(45) Veröffentlichungstag und Bekanntmachung des Hinweises auf die Entscheidung über den Einspruch: **01.04.2020**
(45) Hinweis auf die Patenterteilung: 16.11.2011
(21) Anmeldenummer: 08716362.2
(22) Anmeldetag: 07.03.2008
(51) Int. Cl.: F03D 1/00

(54) **MAST FÜR EINE WINDTURBINE**
MAST FOR A WIND TURBINE
MÂT POUR ÉOLIENNE

(30) Priorität: 15.03.2007 DE 202007003842 U
(43) Veröffentlichungstag der Anmeldung: 29.07.2009
(73) Patentinhaber: Mecal Applied Mechanics B.V., 7521 PL Enschede (NL)
(72) Erfinder: HERRIUS DE ROEST, Anton, NL-7522 JR Enschede (NL)
(74) Vertreter: Lucke, Andreas
(86) Internationale Anmeldenummer: PCT/EP2008/001848
(87) Internationale Veröffentlichungsnummer: WO 2008/110309

(56) Entgegenhaltungen:
- EP-A- 0 960 986
- EP-A- 1 561 883
- EP-A- 1 876 316
- EP-A1- 1 474 579
- WO-A-2004/083633
- DE-U1-202005 010 398
- JP-A- 2005 030 066
- US-A- 4 248 025

## Beschreibung

Die vorliegende Erfindung betrifft einen Mast für eine Windturbine nach dem Oberbegriff des Anspruchs 1 oder 14 sowie ein Verfahren zur Herstellung eines Masten nach dem Oberbegriff des Anspruchs 8 oder 15. Der gattungsgemäße Mast verjüngt sich nach oben und umfaßt mindestens zwei übereinander angeordnete ringförmige Mastabschnitte, wobei ein jeder der ringförmigen Mastabschnitte aus einem Mehrzahl von vorfertigbaren Teilen besteht, von denen zumindest einige einen gekrümmten Abschnitt aufweisen.

Beispiele für Masten der eingangs genannten Art sind beispielsweise aus der EP 1 474 579 B1 bekannt. Die vorfertigbaren Wandteile können beispielsweise aus Beton, Verbundmaterialien, Stahl oder anderen Materialien hoher Festigkeit bestehen. Masten nach dem Oberbegriff des Anspruchs 1 sind zudem aus der DE 20 2005 010398 U1, der EP-A-0 960 986, der EP-A-1 561 883 und der WO 2004/083633 A bekannt.

Durch das Vorfertigen der Teile können die Teile effizienter in einer speziell dazu eingerichteten Umgebung hergestellt werden, und es läßt sich im allgemeinen eine bessere Qualität gewährleisten. Die Größe der vorfertigbaren Wandteile kann dabei so gewählt werden, daß ihre Abmessungen und ihr Gewicht einen einfachen Transport gestatten, für den keine spezielle Genehmigung eingeholt werden muß und keine spezielle Eskorte benötigt wird. Durch Verwendung vorgefertigter Teile läßt sich somit eine hohe Qualität bei relativ geringen Kosten erreichen.

Der vorliegenden Erfindung liegt die Aufgabe zugrunde, die Herstellungskosten für einen Mast der eingangs genannten Art weiter zu verringern.

Diese Aufgabe wird erfindungsgemäß durch einen Mast nach Anspruch 1 und eine Windturbine mit einem Mast nach Anspruch 14 gelöst. Ferner wird sie durch ein Verfahren nach Anspruch 8 oder 15 gelöst. Vorteilhafte Weiterbildungen sind in den abhängigen Ansprüchen angegeben.

Es ist klar, daß zumindest ein Teil der Wandteile gekrümmt sein muß, um ringförmige Mastabschnitte bilden zu können. Außerdem soll sich der Mast gattungsgemäß nach oben verjüngen, so daß in unterschiedlichen ringförmigen Mastabschnitten zumindest teilweise unterschiedliche Wandteile verwendet werden müssen. Die naheliegende Art, dies zu erreichen, besteht darin, in den unterschiedlichen ringförmigen Mastabschnitten mit zunehmender Höhe Wandteile mit zunehmender Krümmung zu verwenden, damit der Durchmesser der ringförmigen Mastabschnitte mit zunehmender Höhe abnehmen kann.

Allerdings sind gerade die gekrümmten Wandteile aufwendig herzustellen. Wenn die Wandteile beispielsweise durch Betonguß hergestellt werden, wird eine vollständig geschlossene und daher relativ teure Form benötigt. Da im Stand der Technik die gekrümmten Abschnitte in unterschiedlichen ringförmigen Mastabschnitten unterschiedlich sind, wird mindestens eine solche vollständig geschlossene und teure Form für jeden ringförmigen Mastabschnitt benötigt, was die Kosten erhöht.

Wenn die Wandteile hingegen aus Stahl bestehen, müssen Stahlteile für unterschiedliche ringförmige Mastabschnitte mit unterschiedlichen Radien gebogen werden, was ebenfalls die Kosten erhöht.

Bei der erfindungsgemäßen Lösung hingegen sind zumindest die gekrümmten Abschnitte von vorfertigbaren Wandteilen in verschiedenen ringförmigen Abschnitten zumindest im Querschnitt identisch. Beispielsweise können in einer Ausführungsform der Erfindung sämtliche gekrümmte Wandteile im gesamten Turm bzw. Mast identisch sein. Falls die Wandteile aus Beton bestehen, würde dann lediglich eine vollständig geschlossene Form benötigt. Die Verjüngung des Mastes nach oben könnte dann durch geeignete Wahl von ebenen Wandteilen erreicht werden die sich in unterschiedlichen ringförmigen Wandabschnitte unterscheiden, wie unten anhand eines Ausführungsbeispiels näher erläutert wird. Dies stellt insgesamt einen großen Effizienzgewinn dar, da die Formen für ebene Wandteile sehr viel einfacher aufgebaut sind und eine Mehrzahl von Formen für ebene Wandteile daher die Herstellungskosten nur geringfügig erhöhen. Zu dem können ebene Formen auch variabel ausgestaltet werden, so daß mit einer variablen Form ebene Wandteile unterschiedlicher Größe hergestellt werden können.

Die Erfindung ist jedoch nicht auf ein solches Ausführungsbeispiel beschränkt, sondern eine wesentliche Effizienzsteigerung kann bereits dann erzielt werden, wenn die Wandteile unterschiedlicher Mastabschnitte zumindest in ihren gekrümmten Abschnitten übereinstimmen, jedoch möglicherweise voneinander verschiedene ebene Abschnitte haben. Denn es ist möglich, eine Form herzustellen, die einen unveränderlichen geschlossenen Abschnitt zum Ausbilden des gekrümmten Abschnitts und einen variablen Abschnitt zum Ausbilden ebener Wandteilabschnitte unterschiedlicher Form und Größe umfaßt. Auch in einem solchen Fall würde für den gesamten Mast nur eine einzige Form zum Herstellen der gekrümmten Wandteile benötigt, so daß die Herstellungskosten wesentlich gesenkt werden können.

Schließlich kann es ausreichen, daß die gekrümmten Abschnitte von Wandteilen unterschiedlicher Mastabschnitte im Querschnitt identisch sind. D.h., die Herstellung wird nur unwesentlich komplizierter, wenn die Wandteile in unterschiedlichen ringförmigen Mastabschnitten bei identischem Querschnitt eine unterschiedliche Länge in Längsrichtung des Mastes haben.

Insofern wird die eingangs erwähnte Effizienzsteigerung durch die Erfindung bereits dann erreicht, wenn zumindest die gekrümmten Abschnitte von vorfertigbaren Wandteilen in verschiedenen ringförmigen Mastabschnitten zumindest im Querschnitt identisch sind.

Erfindungsgemäß sind die gekrümmten Abschnitte der vorfertigbaren Wandteile im Querschnitt bogenförmig. Der Begriff "bogenförmig" ist nicht auf Anordnungen mit konstantem Krümmungsradius beschränkt, sondern dient der Abgrenzung gegenüber Wandteilen mit einer einfach geknickten Struktur.

Vorzugsweise haben die ringförmigen Mastabschnitte im Querschnitt die Form eines Polygons mit bogenförmigen Ecken. Dabei weist das Polygon in den Ausführungsformen von Ansprüchen 1 und 8 vorzugsweise zwischen 3 und 6 bogenförmige Ecken auf.

In einer bevorzugten Ausführungsform besteht ein jeder ringförmiger Mastabschnitt aus abwechselnd angeordneten gekrümmten Wandteilen und ebenen Wandteilen, wobei die gekrümmten Wandteile in unterschiedlichen ringförmigen Mastabschnitten identisch sind. Zumindest ein Teil der ebenen Wandteile sind dabei vorzugsweise im wesentlichen trapezförmig, und die trapezförmigen ebenen Wandteile sind innerhalb eines ringförmigen Mastabschnitts vorzugsweise identisch. Die trapezförmigen ebenen Wandteile sind dabei vorzugsweise so bemessen, daß angrenzende Ränder von trapezförmigen Wandteilen zweier benachbarter ringförmiger Mastabschnitte gleich lang sind.

Bei dieser Ausführungsform sind also die gekrümmten Wandteile in unterschiedlichen ringförmigen Mastabschnitten identisch und können mit derselben Form hergestellt werden, obwohl sich der Mast in unterschiedlichen ringförmigen Mastabschnitten mit zunehmender Höhe verjüngt. Die Verjüngung des Mastes wird durch die Form der ebenen Wandteile erreicht, die daher in unterschiedlichen ringförmigen Wandabschnitten im allgemeinen nicht identisch sind. Wie eingangs erläutert, führt jedoch der Bedarf für ebene Wandteile unterschiedlicher Form zu keiner wesentlichen Erhöhung der Herstellungskosten.

Vorzugsweise sind die Nahtstellen zwischen angrenzenden ebenen Wandteilen zweier benachbarter ringförmiger Mastabschnitte in Längsrichtung des Mastes gegenüber den Nahtstellen zwischen angrenzenden gekrümmten Wandteilen der benachbarten ringförmigen Mastabschnitte versetzt. Dadurch wird eine Verzahnung erreicht, durch die die Stabilität des Mastes beispielsweise gegenüber starkem Winddruck erhöht wird.

In einer besonders vorteilhaften Weiterbildung sind die ebenen Wandteile in dem untersten Mastabschnitt des Mastes in Längsrichtung des Mastes entweder kürzer oder länger als die gekrümmten Wandteile, die ebenen Wandteile in dem obersten Mastabschnitt entsprechend länger bzw. kürzer als die gekrümmten Wandteile und die ebenen Wandteile in den dazwischen liegenden ringförmigen Mastabschnitte genau so lang wie die gekrümmten Wandteile. Auf diese Art läßt sich die oben genannte Verzahnung sehr einfach erreichen, ohne daß der Herstellungsprozeß nennenswert komplizierter würde.

In einer alternativen vorteilhaften Weiterbildung der Erfindung hat zumindest ein Teil der Wandteile einen gekrümmten Abschnitt und einen im wesentlichen trapezförmigen ebenen Abschnitt. Bei diesen Wandteilen können dann die trapezförmigen Abschnitte je nach ringförmigem Mastsegment, in dem sie zu verwenden sind, variiert werden, um so zu einer Verjüngung des Mastes zu führen, während der gekrümmte Abschnitt wie eingangs erwähnt unverändert bleibt. Diese Ausführungsform ist ein Beispiel für eine Anordnung, in der bei einer Betonausführung eine einzige Gußform verwendet werden kann, die bezüglich der ebenen Abschnitte variabel ist, oder bei einer Stahlausführung eine identische Biegeeinrichtung für die Stahlwandteile verwendet werden kann.

Weitere Vorteile und Merkmale der vorliegenden Erfindung ergeben sich aus der folgenden Beschreibung, in der die Prinzipien der Erfindung anhand von Ausführungsbeispielen unter Bezugnahme auf die beigefügten Zeichnungen erläutert werden, von denen
- Fig. 1A: einen Querschnitt durch einen Mast nach einer ersten Ausführungsform der Erfindung entlang der Linie A-A von Fig. 1B zeigt,
- Fig. 1B: eine Längsschnittansicht des Mastes der ersten Ausführungsform zeigt,
- Fig. 1C: eine Seitenansicht des Mastes der ersten Ausführungsform zeigt,
- Fig. 1D: eine perspektivische Ansicht des Mastes der ersten Ausführungsfonn zeigt,
- Fig. 2A und 2B: perspektivische Ansichten des gekrümmten Wandteils des Mastes der ersten Ausführungsform zeigen,
- Fig. 3: eine perspektivische Ansicht der ebenen Wandteile des Mastes der ersten Ausführungsform zeigt,
- Fig. 4A und 4B: eine Draufsicht bzw. eine perspektivische Ansicht eines Mastes nach einer zweiten Ausführungsform der Erfindung zeigt,
- Fig. 5A bzw. 5B: eine Draufsicht bzw. eine perspektivische Ansicht eines Mastes nach einer dritten Ausführungsform der Erfindung zeigt,
- Fig. 6A bis 6D: Beispiele für Querschnitte von gekrümmten Wandteilen zeigen und
- Fig. 7A bzw. 7B: eine Draufsicht bzw. eine perspektivische Ansicht eines Mastes nach einer vierten Ausführungsforin der vorliegenden Erfindung zeigt.

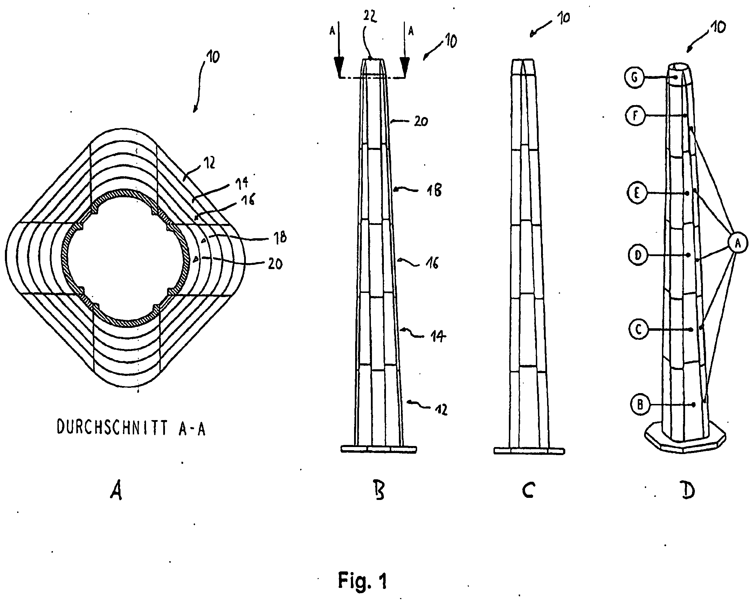

In Fig. 1 ist eine erste Ausführungsform eines Mastes 10 für eine Windturbine nach einer Weiterbildung der Erfindung gezeigt. Insbesondere zeigt Fig. 1A einen Querschnitt des Mastes 10 entlang der Linie A-A von Fig. 1B, Fig. 1B einen Längsschnitt des Mastes 10, Fig. 1C eine Seitenansicht des Mastes 10 und Fig. 1D eine perspektivische Ansicht des Mastes 10.

Wie Fig. 1 zu entnehmen ist, besteht der Mast 10 aus fünf übereinander angeordneten ringförmigen Mastabschnitten 12, 14, 16, 18 und 20. Die Durchmesser der ringförmigen Mastabschnitte 12 bis 20 nehmen von unten nach oben ab, so daß sich der Mast 10 insgesamt von unten nach oben verjüngt. Auf dem obersten ringförmigen Mastabschnitt 20 ist ein Adapter 22 angeordnet, der dazu geeignet ist, einen angrenzenden Stahlrohrabschnitt oder die Gondel der Windturbine zu halten.

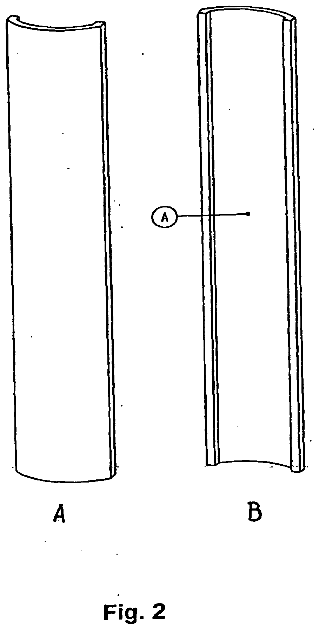

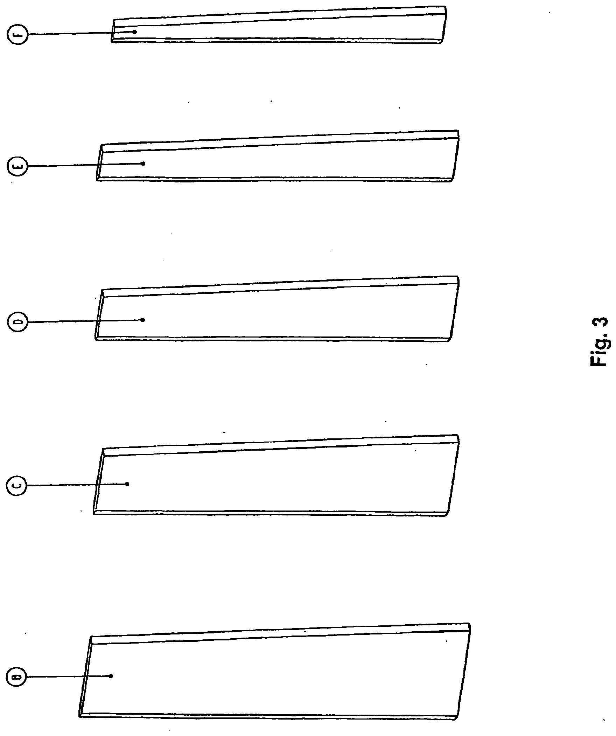

Die ringförmigen Mastabschnitte 12 bis 20 haben den Querschnitt eines Vierecks mit abgerundeten Ecken. Jeder der ringförmigen Mastabschnitte 12 bis 20 besteht aus vier gekrümmten Wandteilen A und vier ebenen Wandteilen B (im untersten Mastabschnitt 12), C (im Mastabschnitt 14), D (im Mastabschnitt 16), E (im Mastabschnitt 18) bzw. F (im obersten Mastabschnitt 20). Die gekrümmten Wandteile A sind in Fig. 2 perspektivisch gezeigt und die ebenen Wandteile B bis F in Fig. 3 perspektivisch gezeigt.

Man beachte, daß die gekrümmten Wandteile A in sämtlichen ringförmigen Mastabschnitten 12 bis 20 identisch sind. Wenn die Wandteile A bis F beispielsweise aus Beton sind, wird daher nur eine einzige geschlossene Form benötigt, um die gekrümmten Wandteile A herzustellen.

Die ebenen Wandteile B bis F sind innerhalb ein und desselben ringförmigen Mastabschnitts 12 bis 20 identisch, aber ihre Breite nimmt mit zunehmender Höhe des zugehörigen ringförmigen Mastabschnitts ab, wodurch die sich verjüngende Form des Masts 10 als Ganzes erreicht wird.

Wie besonders in Fig. 3 zu sehen ist, sind die ebenen Wandteile B bis F trapezförmig, und die kurze Trapezseite ist stets genau so lang wie die lange Trapezseite des ebenen Wandteils im darüber liegenden ringförmigen Mastabschnitt.

Wie ferner in Fig. 3 zu sehen ist, sind die ebenen Wandteile C, D, E der mittleren ringförmigen Wandabschnitte 14, 16 bzw. 18 in Längsrichtung des Mastes 10 betrachtet gleich lang, und ihre Länge entspricht der Länge der gekrümmten Wandteile A. Die ebenen Wandteile B des untersten ringförmigen Mastabschnitts 12 sind etwas länger und die ebenen Wandabschnitte F des obersten ringförmigen Mastabschnitts 20 entsprechend etwas kürzer als die übrigen Wandteile A, C, D und E. Wie Fig. 1B bis 1D zu entnehmen ist, führt dies dazu, daß die Nahtstellen zwischen angrenzenden ebenen Wandteilen zweier benachbarter ringförmiger Mastabschnitte in Längsrichtung des Mastes 10 versetzt sind gegenüber den Nahtstellen zwischen angrenzenden gekrümmten Wandteilen der benachbarten ringförmigen Mastabschnitte. Dadurch ergibt sich eine verzahnte Naht, die die Stabilität des Masts 10 erhöht.

Möglichkeiten zum Verbinden von Wandteilen A bis F sind beispielsweise aus der EP 1 474 579 B1 bekannt und werden daher hier nicht beschrieben.

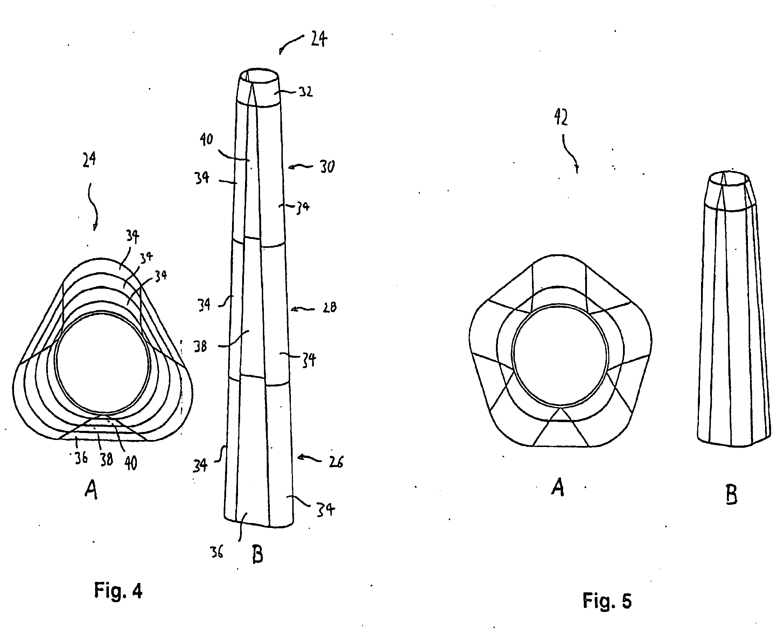

In Fig. 4A ist eine Draufsicht und in Fig. 4B eine perspektivische Ansicht einer zweiten Ausführungsform 24 eines Mastes für eine Windturbine gezeigt. Der Mast 24 besteht aus ringförmigen Mastabschnitten 26, 28 und 30 und einem Adapter 32, der an den obersten ringförmigen Mastabschnitt 30 anschließt. Der Aufbau des Mastes 24 ist demjenigen von Fig. 1 ähnlich, außer daß die ringförmigen Mastabschnitte 26, 28 und 30 im Querschnitt die Form eines Dreiecks mit abgerundeten bzw. bogenförmigen Ecken haben. Ein jeder ringförmiger Mastabschnitt 26, 28, 30 wird aus drei gekrümmten Wandteilen 34, die für den gesamten Mast 24 identisch sind, und drei ebenen Wandabschnitten 36, 38, 40, gebildet, die innerhalb eines jeden ringförmigen Mastabschnittes identisch sind, aber in unterschiedlichen Mastabschnitten 26, 28, 30 verschieden sind, ähnlich wie beim Mast 10 von Fig. 1.

In Fig. 5A und 5B ist ein Mast 42 nach einer dritten Ausführungsform in einer Draufsicht bzw. einer perspektivischen Ansicht gezeigt. Der Aufbau ist ähnlich demjenigen der Masten 10 und 24, außer daß die ringförmigen Mastabschnitte (von denen in Fig. 5 nur einer gezeigt ist) im Querschnitt die Form eines Fünfecks mit abgerundeten Ecken aufweisen. Ansonsten ähnelt der Aufbau des Mastes 42 denjenigen der Masten 10 und 24, so daß eine weitere Beschreibung ausgelassen wird.

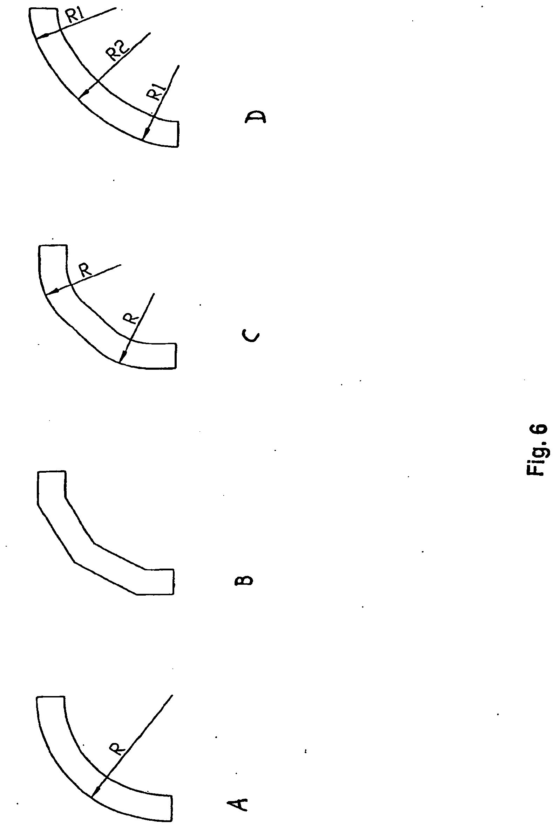

In Fig.6A bis 6D sind unterschiedliche Querschnittsformen für gekrümmte Wandteile gezeigt. Die gekrümmten Wandteile können eine gleichförmige Krümmung haben, d.h. im Querschnitt die Form eines Kreissegmentes aufweisen (Fig. 6A) oder eine Krümmung, die in Umfangsrichtung des Wandteils veränderlich ist, wie dies in Fig. 6D gezeigt ist. Ferner können die gekrümmten Wandteile gekrümmte Abschnitte und gerade Abschnitte aufweisen, wie dies in Fig. 6C gezeigt ist. Das Wandteil von Fig. 6C hat zwei bogenförmige gekrümmte Abschnitte, die durch die Krümmungsradien R gekennzeichnet sind, mit dazwischen liegenden ebenen Abschnitten. Das Wandteil von Fig. 6B besteht aus geraden Abschnitten mit dazwischen liegenden Winkeln.

Sämtliche Wandteile von Fig. 6A bis 6D werden in der vorliegenden Beschreibung als zumindest näherungsweise "bogenförmig" angesehen, selbst das Wandteil von Fig. 6B, da es durch seine drei Knickstellen einer Bogenform im engeren Sinne nahe kommt. Auch ein gekrümmtes Wandteil mit zwei Knickstellen und dazwischenliegenden ebenen Abschnitten würde als "bogenförmig" bezeichnet werden. Nicht als bogenförmig hingegen würde ein einfach geknicktes Wandteil angesehen werden, welches lediglich zwei ebene Abschnitte aufweist, die im Winkel zueinander angeordnet sind.

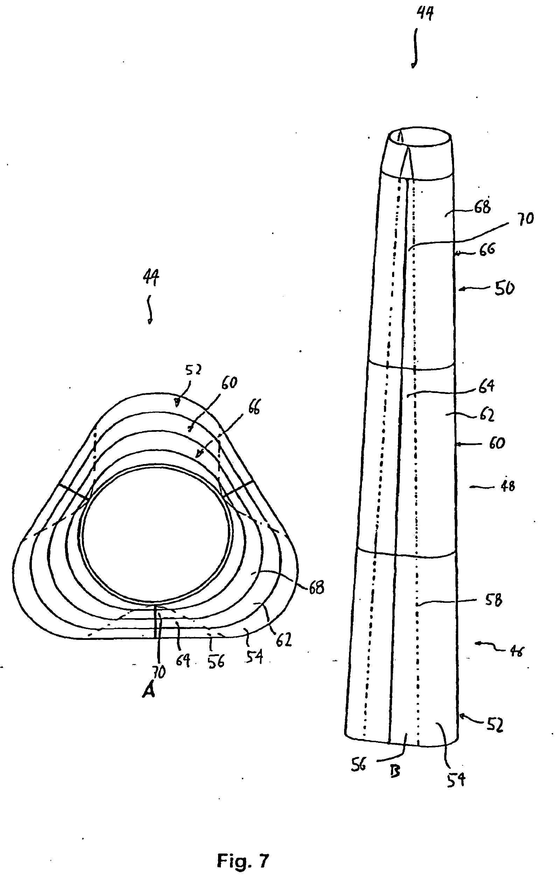

In Fig. 7A und 7B ist als vierte Ausrührungsform ein Mast 44 in einer Draufsicht bzw. einer perspektivischen Ansicht gezeigt.

Man beachte, daß der Mast 44 von Fig. 7A und 7B in seiner Gesamtform mit dem Mast 24 von Fig. 4A und 4B identisch ist und sich lediglich durch die Form der Wandteile unterscheidet. Der Mast 44 hat drei ringförmige Mastabschnitte 46, 48 und 50. Der unterste ringförmige Mastabschnitt 46 besteht aus drei gleichartigen Wandteilen 52, die jeweils einen gekrümmten Abschnitt 54 und zwei ebene Abschnitte 56 umfassen. Eine virtuelle Grenzlinie zwischen dem gekrümmten Abschnitt 54 und den ebenen Abschnitten 56 ist durch eine gestrichelte Linie 58 angedeutet.

Auf ähnliche Weise besteht der mittlere ringförmige Mastabschnitt 48 aus drei gleichartigen Wandteilen 60, die jeweils einen gekrümmten Abschnitt 62 und zwei daran angrenzende ebene Abschnitte 64 aufweisen. Schließlich besteht der oberste ringförmige Mastabschnitt 50 aus drei gleichartigen Wandteilen 66, die jeweils einen gekrümmten Abschnitt 68 und zwei daran angrenzende ebene Abschnitte 70 aufweisen.

Durch Vergleich mit Fig. 4 erkennt man, daß die gekrümmten Abschnitte 54, 62 und 68 der Wandteile 52, 60 bzw. 66 den gekrümmten Wandteilen 34 von Fig. 4 entsprechen. Die ebenen Abschnitte 56, 64 und 70 der Wandteile 52, 60 bzw. 66 sind trapezförmig und entsprechen jeweils der Hälfte der trapezförmigen ebenen Wandteile 36, 38 bzw. 40 von Fig. 4.

Da die Wandteile 52, 60 und 66 jeweils identische gekrümmte Abschnitte 54, 62 bzw. 68 haben, können sie sehr effizient hergestellt werden. Wenn es sich beispielsweise bei den Wandteilen 52, 60 und 66 um Stahlteile handelt, ist der Biegevorgang bei ihrer Herstellung identisch. Wenn es sich bei den besagten Wandteilen um gegossene Betonteile handelt, kann für sämtliche Teile eine einzige Grundform verwendet werden, die zwischen den Gußvorgängen lediglich in einer Weise modifiziert werden muß, daß sich unterschiedlich große ebene Wandabschnitte 56, 64 bzw. 70 ergeben. Eine solche Modifikation ist für den Fachmann relativ einfach und kosteneffizient vorzunehmen. Ungleich schwieriger wenn nicht ausgeschlossen wäre es jedoch, eine Form zu modifizieren, bei der sich die gekrümmten Abschnitte, beispielsweise die Krümmungsradien variieren lassen. Statt dessen würde man zur Herstellung von Wandteilen mit unterschiedlichen Krümmungsradien unterschiedliche Formen bereitstellen, was die Herstellungskosten erhöht.

Die hier beschriebenen Merkmale können sowohl einzeln als auch in Kombination von Bedeutung sein.

Obgleich in den Zeichnungen und in der vorhergehenden Beschreibung bevorzugte Ausführungsbeispiele aufgezeigt und detailliert beschrieben wurden, sollte dies als rein beispielhaft und die Erfindung nicht einschränkend angesehen werden. Es wird daraufhingewiesen, daß nur bevorzugte Ausführungsbeispiele dargestellt und beschrieben wurden, und daß sämtliche Veränderungen und Modifizierungen, die derzeitig und künftig im Umfang der anhängenden Ansprüche liegen, geschützt werden sollen.

### Bezugszeichenliste

- 10: Mast für eine Windturbine
- 12: Erster ringförmiger Mastabschnitt
- 14: Zweiter ringförmiger Mastabschnitt
- 16: Dritter ringförmiger Mastabschnitt
- 18: Vierter ringförmiger Mastabschnitt
- 20: Fünfter ringförmiger Mastabschnitt
- 22: Adapter
- 24: Mast für eine Windturbine
- 26: Erster ringförmiger Mastabschnitt
- 28: Zweiter ringförmiger Mastabschnitt
- 30: Dritter ringförmiger Mastabschnitt
- 32: Adapter
- 34: Gekrümmtes Wandteil
- 36 bis 40: Ebene Wandteile
- 42: Mast für eine Windturbine
- 44: Mast für eine Windturbine
- 46: Erster ringförmiger Mastabschnitt
- 48: Zweiter ringförmiger Mastabschnitt
- 50: Dritter ringförmiger Mastabschnitt
- 52: Gekrümmtes Wandteil
- 54: Gekrümmter Abschnitt des Wandteils 52
- 56: Ebener Abschnitt des Wandteils 52
- 58: Grenzlinie zwischen ebenem und gekrümmtem Abschnitt
- 60: Gekrümmtes Wandteil
- 62: Gekrümmter Abschnitt des Wandteils 60
- 64: Ebener Abschnitt des Wandteils 60
- 66: Gekrümmtes Wandteil
- 68: Gekrümmter Abschnitt des Wandteils 66
- 70: Ebener Abschnitt des Wandteils 66

## Patentansprüche

1. Mast (10, 24, 42, 44) für eine Windturbine, der sich nach oben verjüngt und mindestens zwei übereinander angeordnete ringförmige Mastabschnitte (12, 14, 16, 18, 20; 26, 28, 30; 46, 48, 50) umfaßt,
wobei ein jeder ringförmiger Mastabschnitt aus einer Mehrzahl von vorfertigbaren Wandteilen besteht, die im Wesentlichen aus Beton oder einem Verbundmaterial bestehen, von denen zumindest einige einen gekrümmten Abschnitt aufweisen, **dadurch gekennzeichnet, daß** zumindest die gekrümmten Abschnitte von vorfertigbaren Wandteilen in verschiedenen ringförmigen Mastabschnitten - abgesehen von einem möglichen Unterschied in ihrer Länge in Längsrichtung des Mastes - identisch sind, sodass die zugehörigen Wandteile unter Verwendung derselben Form herstellbar sind, wobei die gekrümmten Abschnitte (A, 34, 52, 62, 68) im Querschnitt bogenförmig sind.

2. Mast (10, 24, 42, 44) nach Anspruch 1, bei dem die ringförmigen Mastabschnitte (12, 14, 16, 18, 20; 26, 28, 30; 46, 48, 50) im Querschnitt die Form eines Polygons mit bogenförmigen Ecken hat, wobei das Polygon vorzugsweise zwischen drei und sechs bogenförmigen Ecken aufweist.

3. Mast (10) nach einem der vorhergehenden Ansprüche, bei dem ein jeder der ringförmigen Mastabschnitte (12, 14, 16, 18, 20) aus abwechselnd angeordneten gekrümmten Wandteilen (A) und ebenen Wandteilen (B, C, D, E, F) bestehen, wobei die gekrümmten Wandteile (A) in unterschiedlichen ringförmigen Mastabschnitten (12, 14, 16, 18, 20) identisch sind, wobei zumindest ein Teil der ebenen Wandteile (B, C, D, E, F) vorzugsweise im Wesentlichen trapezförmig sind.

4. Mast (10) nach Anspruch 3, bei dem die trapezförmigen ebenen Wandteile (B, C, D, E, F) innerhalb eines ringförmigen Mastabschnitts (12, 14, 16, 18, 20) identisch sind, und/oder bei dem die trapezförmigen ebenen Wandteile (B, C, D, E, F) so bemessen sind, daß angrenzende Ränder von trapezförmigen Wandteilen zweier benachbarter ringförmiger Mastabschnitte gleich lang sind.

5. Mast (10) nach einem der Ansprüche 3 oder 4, bei dem Nahtstellen zwischen angrenzenden ebenen Wandteilen (B, C, D, E, F) zweier benachbarter ringförmiger Mastabschnitte (12, 14, 16, 18, 20) in Längsrichtung des Mastes versetzt sind gegenüber den Nahtstellen zwischen angrenzenden gekrümmten Wandteilen (A) der benachbarten ringförmigen Mastabschnitte.

6. Mast (10) nach einem der Ansprüche 3 bis 5, bei dem die ebenen Wandteile (B) in dem untersten ringförmigen Mastabschnitt (12) in Längsrichtung des Mastes (10) entweder kürzer oder länger sind als die gekrümmten Wandteile (A),
die ebenen Wandteile (E) in dem obersten Mastabschnitt (20) entsprechend länger bzw. kürzer sind als die gekrümmten Wandteile (A) und die ebenen Wandteile (C, D, E) in den dazwischen liegenden ringförmigen Mastabschnitten (14, 16, 18) genauso lang sind wie die gekrümmten Wandteile (A).

7. Mast (44) nach einem der Ansprüche 1 bis 2, bei dem zumindest ein Teil der Wandteile (52, 60, 66) einen gekrümmten Abschnitt (54, 62, 68) und einen im Wesentlichen trapezförmigen ebenen Abschnitt (56, 64, 70) umfassen.

8. Verfahren zur Herstellung eines Mastes (10, 24, 42, 44) für eine Windturbine, der sich nach oben verjüngt und mindestens zwei übereinander angeordnete ringförmige Mastabschnitte (12, 14, 16, 18, 20; 26, 28, 30; 46, 48, 50) umfaßt,
bei dem eine Mehrzahl von Wandteilen im Wesentlichen aus Beton oder einem Verbundmaterial vorgefertigt wird, von denen zumindest einige einen gekrümmten Abschnitt aufweisen, und ein jeder ringförmiger Mastabschnitt aus einer Mehrzahl solcher vorgefertigten Wandteile aufgebaut wird, wobei zumindest die gekrümmten Abschnitte von vorgefertigten Wandteilen in verschiedenen ringförmigen Mastabschnitten, abgesehen von einem möglichen Unterschied in ihrer Länge in Längsrichtung des Mastes, identisch sind,
**dadurch gekennzeichnet, daß** in verschiedenen ringförmigen Mastabschnitten vorgefertigte Wandteile mit gekrümmten Abschnitten verwendet werden, die unter Verwendung derselben Form hergestellt wurden, wobei die gekrümmten Abschnitte im Querschnitt bogenförmig sind.

9. Verfahren nach Anspruch 8, bei dem ein jeder der ringförmigen Mastabschnitte (12, 14, 16, 18, 20) aus abwechselnd angeordneten gekrümmten Wandteilen (A) und ebenen Wandteilen (B, C, D, E, F) aufgebaut wird, wobei die gekrümmten Wandteile (A) in unterschiedlichen ringförmigen Mastabschnitten (12, 14, 16, 18, 20) identisch sind.

10. Verfahren nach Anspruch 9, bei dem zumindest ein Teil der ebenen Wandteile (B, C, D, E, F) im Wesentlichen trapezförmig sind, und bei dem vorzugsweise die trapezförmigen ebenen Wandteile (B, C, D, E, F) innerhalb eines ringförmigen Mastabschnitts (12, 14, 16, 18, 20) identisch sind.

11. Verfahren nach einem der Ansprüche 8 bis 10, bei dem zumindest ein Teil der Wandteile unter Verwendung von variablen Formen hergestellt werden, so daß Wandteile unterschiedlicher Größe mit derselben variablen Form hergestellt werden können.

12. Verfahren nach Anspruch 11, bei dem ebene Wandteile unter Verwendung einer Form mit variabler Größe hergestellt werden.

13. Verfahren nach Anspruch 11, bei dem eine variable Form mit einem unveränderlichen Abschnitt zum Ausbilden eines gekrümmten Wandabschnitt und einem variablen Abschnitt zum Ausbilden eines ebenen Wandteilabschnitts unterschiedlicher Form und/oder Größe verwendet wird.

14. Windturbine mit einem Mast (10, 42), der sich nach oben verjüngt und mindestens zwei übereinander angeordnete ringförmige Mastabschnitte (12, 14, 16, 18, 20) umfaßt, wobei ein jeder ringförmiger Mastabschnitt aus einer Mehrzahl von vorfertigbaren Wandteilen besteht, von denen zumindest einige einen gekrümmten Abschnitt aufweisen, **dadurch gekennzeichnet, daß** zumindest die gekrümmten Abschnitte von vorfertigbaren Wandteilen in verschiedenen ringförmigen Mastabschnitten - abgesehen von einem möglichen Unterschied in ihrer Länge in Längsrichtung des Mastes - identisch sind, sodass die zugehörigen Wandteile unter Verwendung derselben Form herstellbar sind, wobei die gekrümmten Abschnitte im Querschnitt bogenförmig sind, und dass die ringförmigen Mastabschnitte (12, 14, 16, 18, 20) im Querschnitt die Form eines Polygons mit bogenförmigen Ecken haben, wobei das Polygon vier, fünf oder sechs bogenförmige Ecken aufweist.

15. Verfahren zur Herstellung eines Mastes (10, 42) einer Windturbine, der sich nach oben verjüngt und mindestens zwei übereinander angeordnete ringförmige Mastabschnitte (12, 14, 16, 18, 20) umfaßt,
bei dem eine Mehrzahl von Wandteilen vorgefertigt wird, von denen zumindest einige einen gekrümmten Abschnitt aufweisen, und ein jeder ringförmiger Mastabschnitt aus einer Mehrzahl solcher vorgefertigten Wandteile aufgebaut wird,
wobei zumindest die gekrümmten Abschnitte von vorgefertigten Wandteilen in verschiedenen ringförmigen Mastabschnitten, abgesehen von einem möglichen Unterschied in ihrer Länge in Längsrichtung des Mastes, identisch sind,
**dadurch gekennzeichnet, daß** in verschiedenen ringförmigen Mastabschnitten vorgefertigte Wandteile mit gekrümmten Abschnitten verwendet werden, die unter Verwendung derselben Form hergestellt wurden, wobei die gekrümmten Abschnitte im Querschnitt bogenförmig sind, und dass die ringförmigen Mastabschnitte (12, 14, 16, 18, 20) im Querschnitt die Form eines Polygons mit bogenförmigen Ecken haben, wobei das Polygon vier, fünf oder sechs bogenförmige Ecken aufweist.

## Claims

1. A mast (10, 24, 42, 44) for a wind turbine, which mast tapers towards the top and comprises at least two annular mast sections (12, 14, 16, 18, 20; 26, 28, 30; 46, 48, 50) arranged on top of each other,
wherein each of the annular mast sections consists of a plurality of prefabricatable wall parts, which consist substantially of concrete or a composite material, at least some of which have a curved section,
**characterized in that** at least the curved sections of prefabricatable wall parts in different annular mast sections are - apart from a possible difference of their length in longitudinal direction of the mast - identical so that the corresponding wall parts can be manufactured using the same mold, wherein the curved sections (A, 34, 52, 62, 68) have an arc-shaped cross-section.

2. The mast (10, 24, 42, 44) according to claim 1, wherein the annular mast sections (12, 14, 16, 18, 20; 26, 28, 30; 46, 48, 50) have a cross-section with the shape of a polygon with arc-shaped corners, wherein the polygon preferably has between three and six arc-shaped corners.

3. The mast (10) according to any one of the preceding claims, wherein each of the annular mast sections (12, 14, 16, 18, 20) consists of alternately arranged curved wall parts (A) and plane wall parts (B, C, D, E, F), wherein the curved wall parts (A) in different annular mast sections (12, 14, 16, 18, 20) are identical, wherein preferably at least some of the plane wall parts (B, C, D, E, F) are substantially trapezoidal.

4. The mast (10) according to claim 3, wherein the trapezoidal plane wall parts (B, C, D, E, F) within an annular mast section (12, 14, 16, 18, 20) are identical, and/or wherein the trapezoidal plane wall parts (B, C, D, E, F) are dimensioned in such a manner that abutting edges of trapezoidal wall parts of two adjacent annular mast sections have the same length.

5. The mast (10) according to any one of claims 3 or 4, wherein the joints between abutting plane wall parts (B, C, D, E, F) of two adjacent annular mast sections (12, 14, 18, 20) are offset in longitudinal direction of the mast with respect to the joints between abutting curved wall parts (A) of the adjacent annular mast sections.

6. The mast (10) according to any one of claims 3 to 5, wherein the plane wall parts (B) in the bottom annular mast section (12) of the mast (10) are either shorter or longer in longitudinal direction than the curved wall parts (A),
the plane wall parts (E) in the top mast section (20) are correspondingly longer or shorter, respectively, than the curved wall parts (A), and the plane wall parts (C, D, E) in the intermediate annular mast sections (14, 16, 18) are of the same length as the curved wall Parts (A).

7. The mast (44) according to any one of claims 1 to 2, wherein at least a part of the wall parts (52, 60, 66) comprise a curved section (54, 62, 68) and a substantially trapezoidal plane section (56, 64, 70).

8. A method for manufacturing a mast (10, 24, 42, 44) for a wind turbine, which mast tapers towards the top and comprises at least two annular mast sections (12, 14, 16, 18, 20; 26, 28, 30; 46, 48, 50) arranged on top of each other,
wherein a plurality of wall parts is prefabricated from concrete or a composite material, at least some of which have a curved section, and each of the annular mast sections is built up from a plurality of such prefabricated wall parts, wherein at least the curved sections of prefabricated wall parts in different annular mast sections, apart from a possible difference of their length in longitudinal direction of the mast, are identical, **characterized in that** in different annular mast sections, prefabricated wall parts with curved sections are used which have been manufactured using the same mold, wherein the curved sections have an arc-shaped cross-section.

9. The method according to claim 8, wherein each of the annular mast sections (12, 14, 16, 18, 20) is constructed of alternately arranged curved wall parts (A) and plane wall parts (B, C, D, E, F), wherein the curved wall parts (A) in different annular mast sections (12, 14, 16, 18, 20) are identical.

10. The method according to claim 9, wherein at least some of the plane wall parts (B, C, D, E, F) are substantially trapezoidal, and wherein the trapezoidal plane wall parts (B, C, D, E, F) within an annular mast section (12, 14, 16, 18, 20) are preferably identical.

11. The method according to any one of the claims 8 to 10, wherein at least some of the wall parts are manufactured by using variable molds so that wall parts of different sizes can be manufactured with the same variable mold.

12. The method according to claim 11, wherein plane wall parts are manufactured by using a mold with variable size.

13. The method according to claim 11, wherein a variable mold with an unvarying section for forming a curved wall section and a variable section for forming a plane wall part section of different shape and/or size is used.

14. A wind turbine having mast (10, 24, 42, 44), which mast tapers towards the top and comprises at least two annular mast sections (12, 14, 16, 18, 20) arranged on top of each other,
wherein each of the annular mast sections consists of a plurality of prefabricatable wall parts, at least some of which have a curved section,
**characterized in that** at least the curved sections of prefabricatable wall parts in different annular mast sections are - apart from a possible difference of their length in longitudinal direction of the mast - identical so that the corresponding wall parts can be manufactured using the same mold, wherein the curved sections (A, 34, 52, 62, 68) have an arc-shaped cross-section, and **in that** the annular mast sections (12, 14, 16, 18, 20;) have a cross-section with the shape of a polygon with arc-shaped corners, wherein the polygon has four, five, or six arc-shaped corners.

15. A method for manufacturing a mast (10, 24, 42, 44) of a wind turbine, which mast tapers towards the top and comprises at least two annular mast sections (12, 14, 16, 18, 20) arranged on top of each other,
wherein a plurality of wall parts is prefabricated, at least some of which have a curved section, and each of the annular mast sections is built up from a plurality of such prefabricated wall parts, wherein at least the curved sections of prefabricated wall parts in different annular mast sections, apart from a possible difference of their length in longitudinal direction of the mast, are identical,
**characterized in that** in different annular mast sections, prefabricated wall parts with curved sections are used which have been manufactured using the same mold, wherein the curved sections have an arc-shaped cross-section, and **in that** the annular mast sections (12, 14, 16, 18, 20;) have a cross-section with the shape of a polygon with arc-shaped corners, wherein the polygon has four, five, or six arc-shaped corners.

## Revendications

1. Mât (10, 24, 42, 44) pour une turbine éolienne, qui se rétrécit vers le haut et comprend au moins deux tronçons de mât (12, 14, 16, 18, 20 ; 26, 28, 30 ; 46, 48, 50) de forme annulaire, disposés l'un au-dessus de l'autre, chaque tronçon de mât de forme annulaire se composant d'une pluralité de parties de paroi préfabriquables, les parties de paroi étant principalement à base de béton ou d'un matériau composite, dont au moins certaines présentent un tronçon incurvé, **caractérisé en ce qu'**au moins les tronçons incurvés de parties de paroi préfabriquables sont identiques dans différents tronçons de mât de forme annulaire - en dehors d'une éventuelle différence dans leur longueur dans le sens longitudinal du mât - de sorte que les parties de paroi correspondantes peuvent être fabriquées en utilisant le même moule, les tronçons incurvés (A, 34, 52, 62, 68) ayant une forme de coude en section.

2. Mât (10, 24, 42, 44) selon la revendication 1, sur lequel les tronçons de mât de forme annulaire (12, 14, 16, 18, 20; 26 28, 30; 46, 48, 50) ont en section la forme d'un polygone avec des angles en forme d'arc, le polygone présentant de préférence entre trois et six angles en forme d'arc.

3. Mât (10) selon l'une des revendications précédentes, sur lequel chacun des tronçons de mât (12, 14, 16, 18, 20) de forme annulaire est constitué de parties de paroi (A) incurvées et de parties de paroi (B, C, D, E, F) planes disposées alternativement, les parties de paroi (A) incurvées étant identiques dans différents tronçons de mât (12, 14, 16, 18, 20) de forme annulaire, au moins une partie des parties de paroi (B, C, D, E, F) planes étant de préférence sensiblement en forme de trapèze.

4. Mât (10) selon la revendication 3, sur lequel les parties de paroi (B, C, D, E, F) planes en forme de trapèze sont identiques à l'intérieur d'un tronçon de mât (12, 14, 16, 18, 20) de forme annulaire, et/ou sur lequel les parties de paroi (B, C, D, E, F) planes en forme de trapèze sont dimensionnées de telle sorte que des bords contigus de parties de paroi en forme de trapèze de deux parties de mât voisines de forme annulaire ont une longueur identique.

5. Mât (10) selon l'une des revendications 3 ou 4, sur lequel des interfaces entre des parties de paroi (B, C, D, E, F) planes contiguës de deux tronçons de mât (12, 14, 16, 18, 20) voisins de forme annulaire sont décalées dans le sens longitudinal du mât par rapport aux interfaces entre des parties de paroi (A) incurvées contiguës des tronçons de mât voisins de forme annulaire.

6. Mât (10) selon l'une des revendications 3 à 5, sur lequel les parties de paroi (B) planes dans le tronçon de mât (12) inférieur de forme annulaire dans le sens longitudinal du mât (10) sont soit plus courtes soit plus longues que les parties de paroi (A) incurvées, les parties de paroi (E) planes dans le tronçon de mât (20) supérieur sont en conséquence plus longues ou plus courtes que les parties de paroi (A) incurvées et les parties de paroi (C, D, E) planes dans les tronçons de mât (14, 16, 18) de forme annulaire intercalés sont aussi longues que les parties de paroi (A) incurvées.

7. Mât (44) selon l'une des revendications 1 à 2, sur lequel au moins une partie des parties de paroi (52, 60, 66) comprend un tronçon (54, 62, 68) incurvé et un tronçon (56, 64, 70) plan sensiblement trapézoïdal.

8. Procédé pour fabriquer un mât (10, 24, 42, 44) pour une turbine éolienne, qui se rétrécit vers le haut et comprend au moins deux tronçons de mât (12, 14, 16, 18, 20; 26, 28, 30; 46 48, 50) de forme annulaire, disposés l'un au-dessus de l'autre, dans lequel une pluralité de parties de paroi est préfabriquée à base de béton ou d'un matériau composite, parties dont au moins certaines présentent un tronçon incurvé, et chaque tronçon de mât de forme annulaire est constitué d'une pluralité de telles parties de paroi préfabriquées, au moins les tronçons incurvés des parties de paroi préfabriquées dans des différents tronçons de mât de forme annulaire étant identiques à l'exception d'une éventuelle différence de leur longueur dans la direction longitudinale du mât, **caractérisé en ce que** dans différents tronçons de mât de forme annulaire, des parties de paroi préfabriquées avec des tronçons incurvés sont utilisées, qui sont fabriquées en utilisant le même moule et aient une forme de coude en section.

9. Procédé selon la revendication 8, dans lequel chacun des tronçons de mât (12, 14, 16, 18, 20) de forme annulaire est construit à partir de parties de paroi (A) incurvées et de parties de paroi (B, C, D, E, F) planes, disposées en alternance, les parties de paroi (A) incurvées étant identiques dans différents tronçons de mât (12, 14, 16, 18, 20) de forme annulaire.

10. Procédé selon la revendication 9, dans lequel au moins une partie des parties de paroi (B, C, D, E, F) planes sont sensiblement en forme de trapèze, et dans lequel de préférence les parties de paroi (B, C, D, E, F) planes en forme de trapèze sont identiques à l'intérieur d'un tronçon de mât (12, 14, 16, 18, 20) de forme annulaire.

11. Procédé selon l'une des revendications 8 à 10, dans lequel au moins une partie des parties de paroi est fabriquée en utilisant des moules variables, de telle sorte que des parties de paroi de grandeur différente peuvent être fabriquées avec le même moule variable.

12. Procédé selon la revendication 11, dans lequel des parties de paroi planes sont fabriquées en utilisant un moule avec une grandeur variable.

13. Procédé selon la revendication 11, dans lequel un moule variable avec un tronçon non variable est utilisé pour former un tronçon de paroi incurvé et un tronçon variable pour former un tronçon plan de partie de paroi de forme différente et/ou de grandeur différente.

14. Turbine éolienne avec un mât (10, 24, 42, 44) qui se rétrécit vers le haut et comprend au moins deux tronçons de mât (12, 14, 16, 18, 20) de forme annulaire, disposés l'un au-dessus de l'autre, chaque tronçon de mât de forme annulaire se composant d'une pluralité de parties de paroi préfabriquables, dont au moins certaines présentent un tronçon incurvé, **caractérisé en ce qu'**au moins les tronçons incurvés de parties de paroi préfabriquables sont identiques dans différents tronçons de mât de forme annulaire - en dehors d'une éventuelle différence dans leur longueur dans le sens longitudinal du mât - de sorte que les parties de paroi correspondantes peuvent être fabriquées en utilisant le même moule, les tronçons incurvés (A, 34, 52, 62, 68) ayant une forme de coude en section, et **en ce que** les tronçons de mât de forme annulaire (12, 14, 16, 18, 20) ont en section la forme d'un polygone avec des angles en forme d'arc, le polygone présentant quatre, cinq ou six angles en forme d'arc.

15. Procédé pour fabriquer un mât (10, 24, 42, 44) d'une turbine éolienne, qui se rétrécit vers le haut et comprend au moins deux tronçons de mât (12, 14, 16, 18, 20) de forme annulaire, disposés l'un au-dessus de l'autre, dans lequel une pluralité de parties de paroi est préfabriquée, parties dont au moins certaines présentent un tronçon incurvé, et chaque tronçon de mât de forme annulaire est constitué d'une pluralité de telles parties de paroi préfabriquées, au moins les tronçons incurvés des parties de paroi préfabriquées dans des différents tronçons de mât de forme annulaire étant identiques, à l'exception d'une éventuelle différence de leur longueur dans la direction longitudinale du mât, **caractérisé en ce que** dans différents tronçons de mât de forme annulaire, des parties de paroi préfabriquées avec des tronçons incurvés sont utilisées, qui sont fabriquées en utilisant le même moule et aient une forme de coude en section, et **en ce que** les tronçons de mât de forme annulaire (12, 14, 16, 18, 20) ont en section la forme d'un polygone avec des angles en forme d'arc, le polygone présentant quatre, cinq ou six angles en forme d'arc.
